# EUROPEAN PATENT APPLICATION

(11) **EP 4 632 911 A1**
(43) Date of publication of application: **15.10.2025**
(21) Application number: 24865629.0
(22) Date of filing: 24.06.2024
(51) Int. Cl.: H01M 50/289, H01M 50/358, H01M 50/213, H01M 50/249

(54) **BATTERY PACK**

(30) Priority: 11.09.2023 KR 20230120715
(71) Applicant: LG Energy Solution, Ltd., Seoul 07335 (KR)
(72) Inventor: AHN, Jun-Young, Daejeon 34122 (KR); PARK, So-Jeong, Daejeon 34122 (KR); SONG, Jong-Min, Daejeon 34122 (KR); OH, Kwang-Keun, Daejeon 34122 (KR); LEE, Yong-Ho, Daejeon 34122 (KR); JUNG, In-Hyuk, Daejeon 34122 (KR); YANG, Jin-Oh, Daejeon 34122 (KR)
(74) Representative: Goddar, Heinz J.
(86) International application number: PCT/KR2024/008724
(87) International publication number: WO 2025/058185

(57) **Abstract**

A battery pack is disclosed. The battery pack according to an embodiment of the present disclosure includes a base plate; an outer side wall coupled to an upper surface of the base plate; a plurality of battery cells located on the base plate and forming an array; and a side structure located on the base plate, extended along one side of the base plate and configured to keep the plurality of battery cells and the base plate apart.

## Description

### TECHNICAL FIELD

The present disclosure relates to a battery pack.

This application is based on and claims priority from Korean Patent Application No. 10-2023-0120715, filed on September 11, 2023, with the Korean Intellectual Property Office, the disclosure of which is incorporated herein in its entirety by reference.

### BACKGROUND

There has been a dramatic increase in demand for portable electronic products such as laptop computers, video cameras and mobile phones, and with the widespread use of robots and electric vehicles, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily use lithium-based oxide and carbon materials as a positive electrode active material and a negative electrode active material, respectively. A lithium secondary battery includes an electrode assembly including a positive electrode plate and a negative electrode plate respectively coated with the positive electrode active material and the negative electrode active material with a separator interposed between the positive electrode plate and the negative electrode plate, and an outer packaging material or a battery case accommodating the electrode assembly and an electrolyte solution in an air-tight manner.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the outer packaging material.

Recently, secondary batteries are widely used for power or energy storage in not only small devices such as mobile electric devices but also medium- or large-sized devices such as electric vehicles or Energy Storage Systems (ESS). A plurality of secondary batteries may be electrically connected and received in a module case to form a battery module. Additionally, a plurality of battery modules may be connected to form a battery pack.

However, when the plurality of secondary batteries (battery cells) or the plurality of battery modules are densely packed in a narrow space, they may be susceptible to thermal event. In particular, when an event such as thermal runaway occurs in any one battery cell, high gases, flames or heat may be generated. In case the gases, flames or heat is transferred to other battery cell included in the same battery module, an explosive chain reaction such as thermal propagation may occur. Additionally, the chain reaction may cause fires or explosions in not only the corresponding battery module but also other battery module.

Moreover, because medium- or large-scale battery packs for electric vehicles include a large number of battery cells and battery modules to increase the output and/or capacity, they have higher chain reaction risks. In addition, the battery packs mounted on electric vehicles may be located near users such as drivers. Accordingly, in case it fails to properly control a thermal event in a specific battery module, chain reaction occurs, resulting in serious economic damage and human loss.

### SUMMARY

### Technical Problem

An object of the present disclosure is to solve these and other problems.

Another object of the present disclosure is to provide a battery pack that is easy to control venting.

Still another object of the present disclosure is to provide a battery pack with improved assembly efficiency.

Yet another object of the present disclosure is to provide a battery pack with improved energy density.

### Technical Solution

To achieve the above-described objectives, a battery pack according to an embodiment of the present disclosure includes a base plate; an outer side wall coupled to an upper surface of the base plate; a plurality of battery cells located on the base plate and forming an array; and a side structure located on the base plate, extended along one side of the base plate and configured to keep the plurality of battery cells and the base plate apart.

Additionally, the side structure may include a body extended and configured to cover a side of the plurality of battery cells.

Additionally, the body may include a curved portion formed along the side of the battery cells.

Additionally, the side structure may further include a plurality of bottom ribs protruded from the body; and a plurality of top ribs protruded from the body and located above the plurality of bottom ribs, and the plurality of battery cells may be mounted between the plurality of bottom ribs and the plurality of top ribs.

Additionally, the side structure may further include a partition portion protruded from the body and located between the adjacent battery cells among the plurality of battery cells.

Additionally, the side structure may include a head formed at an end of the body and configured to cover the plurality of battery cells; and a venting hole formed at the head and being in communication with a gap between the plurality of battery cells and the base plate.

Additionally, the venting hole may be open downward.

Additionally, a height of the venting hole may be lower than a height of the bottom ribs.

Additionally, the battery pack may further include a guide pipe installed at the upper surface of the base plate and located between the head and the outer side wall, the guide pipe having an inlet hole, wherein the inlet hole and the venting hole face each other.

Additionally, the head may further include a slot located on the venting hole, and the battery pack may further include a cooling unit installed at the slot.

Additionally, the battery pack may further include a venting device installed at the outer side wall.

A vehicle according to an aspect of the present disclosure includes the battery pack of the present disclosure.

### Advantageous Effects

According to at least one of the embodiments of the present disclosure, it may be easy to control battery pack venting.

According to at least one of the embodiments of the present disclosure, it may be possible to improve thermal safety of the battery pack.

According to at least one of the embodiments of the present disclosure, it may be possible to improve stiffness of the battery pack.

According to at least one of the embodiments of the present disclosure, it may be possible to improve energy density of the battery pack.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a perspective view showing a battery pack according to an embodiment of the present disclosure.
FIG. 2 is an exploded view showing some components of a battery pack according to an embodiment of the present disclosure.
FIG. 3 is a perspective view showing a side structure of a battery pack according to an embodiment of the present disclosure.
FIG. 4 is a perspective view showing a side structure and battery cells of a battery pack according to an embodiment of the present disclosure.
FIG. 5 is a cross-sectional view of FIG. 4, taken along the line A-A'.
FIG. 6 is a cross-sectional view of FIG. 4, taken along the line B-B'.
FIG. 7 is a diagram showing a side structure and battery cells of a battery pack according to an embodiment of the present disclosure when viewed from bottom.
FIG. 8 is an exploded view showing some components of a cell array structure of a battery pack according to an embodiment of the present disclosure.
FIG. 9 is a diagram showing a cell array structure of a battery pack according to an embodiment of the present disclosure.
FIG. 10 is a diagram showing a cell array structure of a battery pack according to an embodiment of the present disclosure when viewed from bottom.
FIG. 11 is an enlarged view of section C in FIG. 10.
FIG. 12 is an enlarged view of section D in FIG. 10.
FIG. 13 is a diagram showing a guide pipe of a battery pack according to an embodiment of the present disclosure.
FIG. 14 is a diagram showing a cell array structure and a guide pipe of a battery pack according to an embodiment of the present disclosure.
FIG. 15 is a diagram showing the connection of a cell array structure and a guide pipe of a battery pack according to an embodiment of the present disclosure.
FIG. 16 is a perspective view showing some components of a battery pack according to an embodiment of the present disclosure.
FIG. 17 is a cross-sectional view of FIG. 16, taken along the line E-E'.
FIG. 18 is an enlarged view of section F in FIG. 17.
FIG. 19 is an enlarged view of section G in FIG. 17.
FIG. 20 is a cross-sectional view of FIG. 16, taken along the line H-H'.
FIG. 21 is an enlarged view of section I in FIG. 20.
FIG. 22 is an enlarged view of section J in FIG. 20.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the description provided herein and illustrations in the drawings are provided to describe some exemplary embodiments of the present disclosure, but not intended to fully describe the technical aspect of the present disclosure, so it should be understood that a variety of other equivalents and modifications could have been made thereto at the time of filing the patent application.

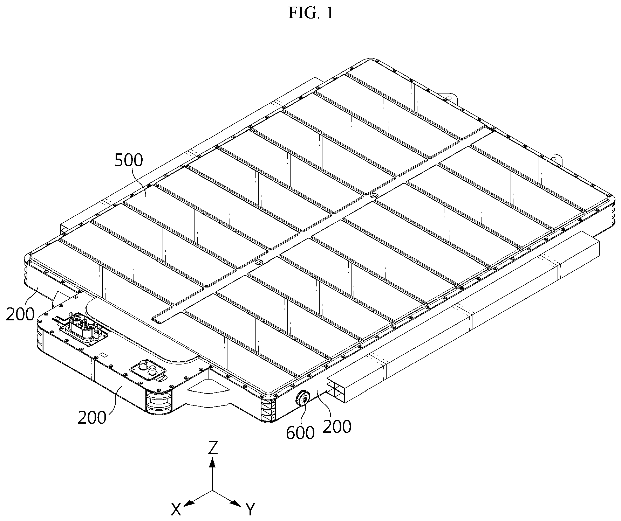

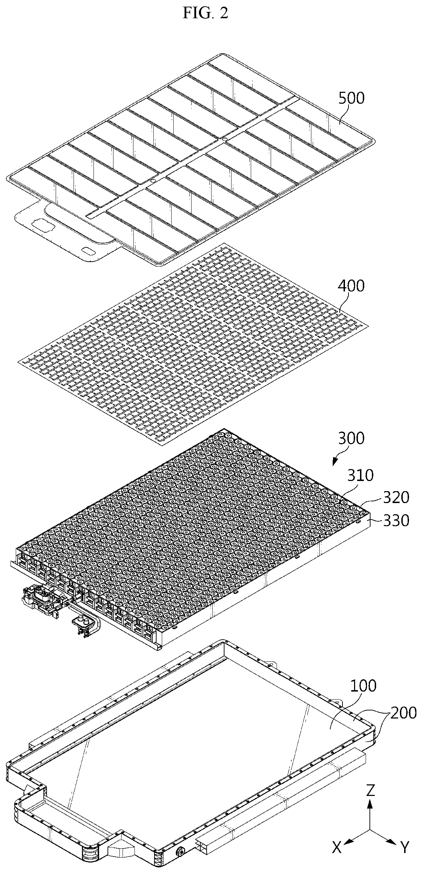

FIG. 1 is a perspective view showing a battery pack according to an embodiment of the present disclosure. FIG. 2 is an exploded view showing some components of the battery pack according to an embodiment of the present disclosure. Referring to FIGs. 1 and 2, the battery pack according to an embodiment of the present disclosure may include a base plate 100, an outer side wall 200, a plurality of battery cells 310 and a side structure 320.

The base plate 100 may have a flat plate shape. The base plate 100 may be approximately rectangular in shape.

The outer side wall 200 may be fastened, coupled, fixed or attached to the upper surface of the base plate 100. The outer side wall 200 and the base plate 100 may form an internal space.

The plurality of battery cells 310 may be received in the internal space. The plurality of battery cells 310 may be arranged to form an array. The plurality of battery cells 310 may be located on the base plate 100. In this instance, the battery cell 310 may refer to a secondary battery. Additionally, the battery cell 310 may be a secondary battery having a cylindrical shape.

The side structure 320 may be located on the base plate 100. The side structure 320 may extend along one side of the base plate 100. The side structure 320 may keep the plurality of battery cells 310 and the base plate 100 apart. Alternatively, the side structure 320 may form a space between the plurality of battery cells 310 and the base plate 100.

By this configuration of the present disclosure, it may be easy to control battery pack venting. When a thermal event occurs in the battery cell 310, venting gases or flammable particles may be vented in the downward direction or -Z axis direction. The venting gases or flammable particles may flow through the space between the battery cells 310 and the base plate 100 and exit the battery pack.

Referring to FIGs. 1 and 2, the battery pack according to an embodiment of the present disclosure may include a busbar assembly 400 and a pack cover 500. The pack cover 500 may cover the internal space of the battery pack. The pack cover 500 may have a plate shape. The pack cover 500 may have a similar shape to the base plate 100. The pack cover 500 may be fastened, coupled, fixed or attached to the outer side wall 200.

The busbar assembly 400 may be located between the plurality of battery cells 310 and the pack cover 500. The busbar assembly 400 may be physically connected to the top of the plurality of battery cells 310. Additionally, the busbar assembly 400 may be electrically connected to the plurality of battery cells 310.

A venting device 600 may be provided in the outer surface of the outer side wall 200. When the pressure in the battery pack rises, the venting device 600 may vent gases.

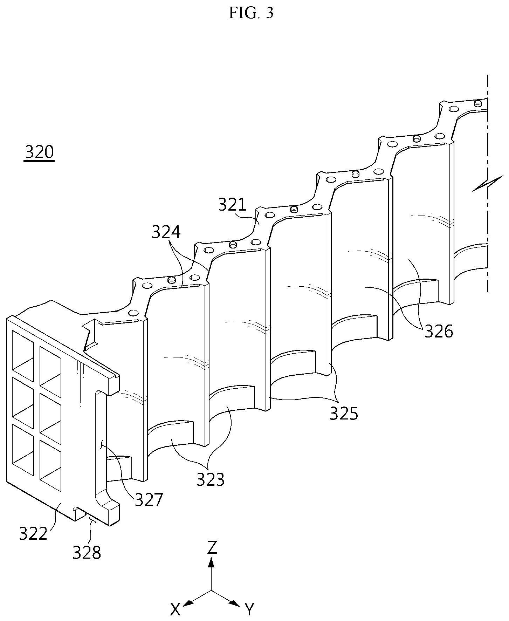

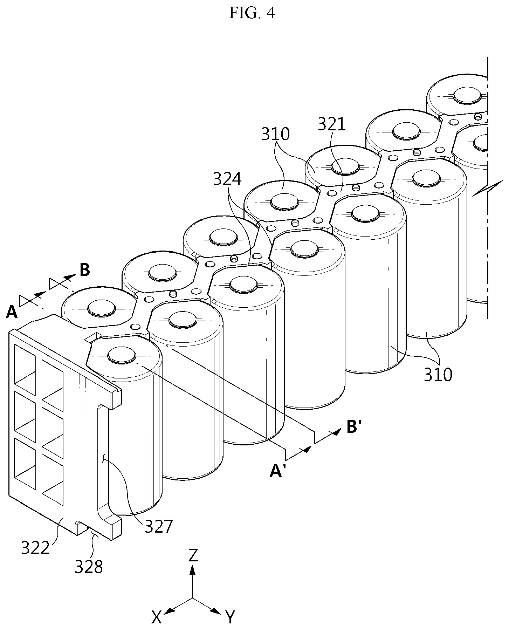

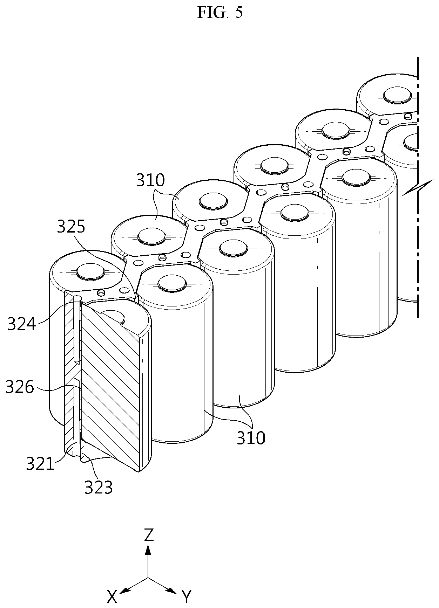

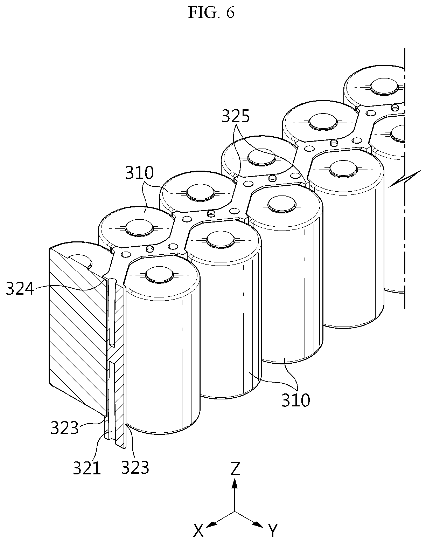

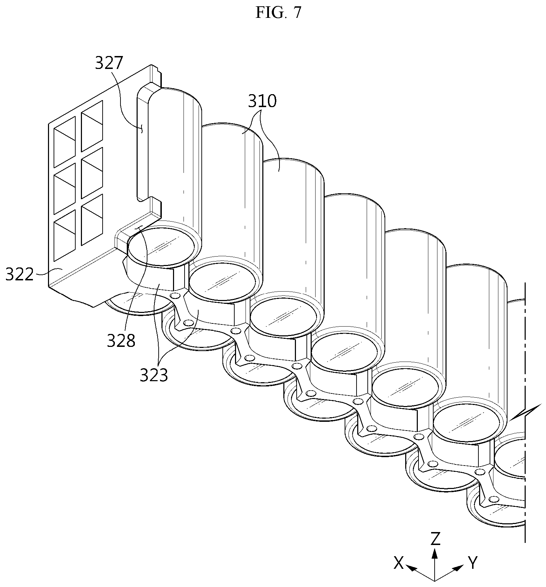

FIG. 3 is a perspective view showing the side structure 320 of the battery pack according to an embodiment of the present disclosure. FIG. 4 is a perspective view showing the side structure 320 and the battery cells 310 of the battery pack according to an embodiment of the present disclosure. FIG. 5 is a cross-sectional view of FIG. 4, taken along the line A-A'. FIG. 6 is a cross-sectional view of FIG. 4, taken along the line B-B'. FIG. 7 is a diagram showing the side structure 320 and the battery cells 310 of the battery pack according to an embodiment of the present disclosure when viewed from bottom.

Referring to FIGs. 3 to 7, the side structure 320 of the battery pack according to an embodiment of the present disclosure may include a body 321 extended and configured to cover the side of the plurality of battery cells 310. The body 321 may extend along X axis direction. The body 321 may support and accommodate the array of battery cells 310. Alternatively, the body 321 may align the plurality of battery cells 310 to form the array of battery cells 310. The body 321 may support and accommodate the battery cells 310 on each of the left side and the right side.

By this configuration of the present disclosure, it may be easy to align the plurality of battery cells 310. Accordingly, energy density of the battery pack may be improved. Additionally, stiffness of the battery pack may be improved.

Referring to FIGs. 3 to 7, the body 321 of the side structure 320 of the battery pack according to an embodiment of the present disclosure may include a curved portion 326 along the side of the battery cell 310. The body 321 may include the curved portion 326 formed on the inner side. The curved portion 326 may be curved along the side of the battery cell 310. The curved portion 326 may support the side of the battery cell 310. The curved portion 326 may include a plurality of curved portions. The curved portions 326 and the battery cells 310 may correspond to each other in a one-to-one relationship. The curved portion 326 may be disposed on each of the left side and the right side of the body 321.

By this configuration of the present disclosure, the plurality of battery cells 310 may be stably fixed and supported by the side structure 320. Accordingly, stiffness of the battery pack may be improved.

Referring to FIGs. 3 to 7, the side structure 320 of the battery pack according to an embodiment of the present disclosure may include a plurality of bottom ribs 323 protruded from the body 321 and a plurality of top ribs 324 protruded from the body 321 and disposed above the plurality of bottom ribs 323. Additionally, the plurality of battery cells 310 may be mounted between the plurality of bottom ribs 323 and the plurality of top ribs 324. The side structure 320 may include the bottom ribs 323 protruded to the left and right. Additionally, the side structure 320 may include the top ribs 324 protruded to the left and right. The top ribs 324 may be located higher than the bottom ribs 323. The top ribs 324 and the bottom ribs 323 may correspond to each other in a one-to-one relationship. The plurality of battery cells 310 may be fixed between the bottom ribs 323 and the top ribs 324. The plurality of battery cells 310 may be spaced apart from the base plate 100 by the height of the bottom ribs 323.

By this configuration of the present disclosure, the plurality of battery cells 310 may be stably fixed and supported by the side structure 320. Additionally, a venting space may be formed below the battery cells 310.

Referring to FIGs. 3 to 7, the side structure 320 of the battery pack according to an embodiment of the present disclosure may further include a partition portion 325 protruded from the body 321 and located between the adjacent battery cells 310. The partition portion 325 may include a plurality of partition portions. The partition portion 325 may be protruded to left and right from the body 321 of the side structure 320.

By this configuration of the present disclosure, the adjacent battery cells 310 may be spaced apart from each other by the partition portions 325. Accordingly, thermal safety may be improved.

Referring to FIGs. 3 to 7, the side structure 320 of the battery pack according to an embodiment of the present disclosure may have a head 322 and a venting hole 328. The head 322 may be formed at two ends of the body 321. The head 322 may be disposed at each of the front side and the rear side of the body 321. The heads 322 may cover the plurality of battery cells 310.

The venting hole 328 may be formed in the head 322. The venting hole 328 may be formed in each of the front head 322 and the rear head 322. The venting hole 328 may be in communication with the gap between the plurality of battery cells 310 and the base plate 100.

By this configuration of the present disclosure, it may be easy to control battery pack venting. When a thermal event occurs in the battery cell 310, venting gases or flammable particles may be vented in the downward direction or -Z axis direction. The venting gases or flammable particles may flow through the space between the battery cells 310 and the base plate 100 and exit the battery pack through the venting hole 328.

Referring to FIGs. 3 to 7, the venting hole 328 of the side structure 320 of the battery pack according to an embodiment of the present disclosure may be open downward. Additionally, the venting hole 328 may be open rightward.

By this configuration of the present disclosure, it may be easy to control battery pack venting. Because the venting hole 328 is open downward, it may be possible to lower the resistance of the flow of venting gases or flammable particles from the battery cells 310. Accordingly, thermal safety of the battery pack may be improved.

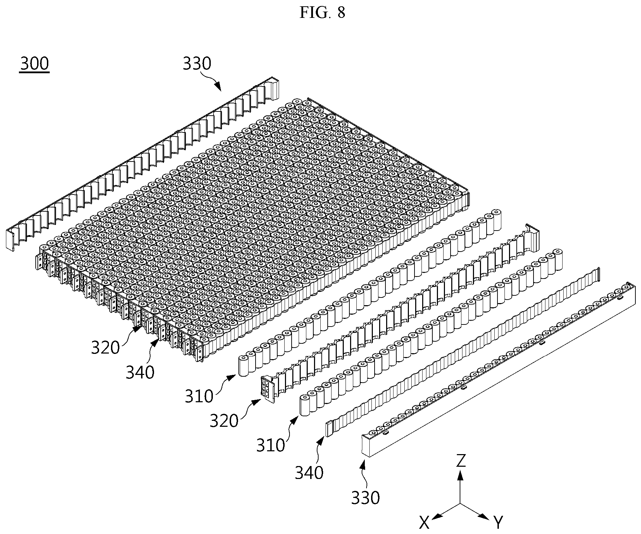

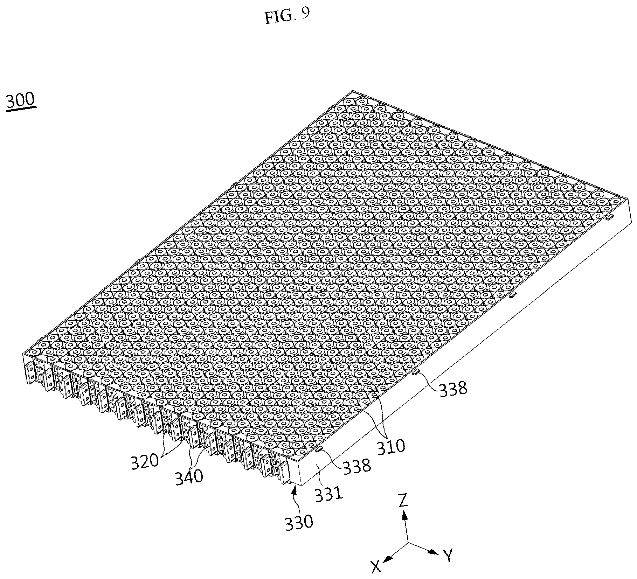

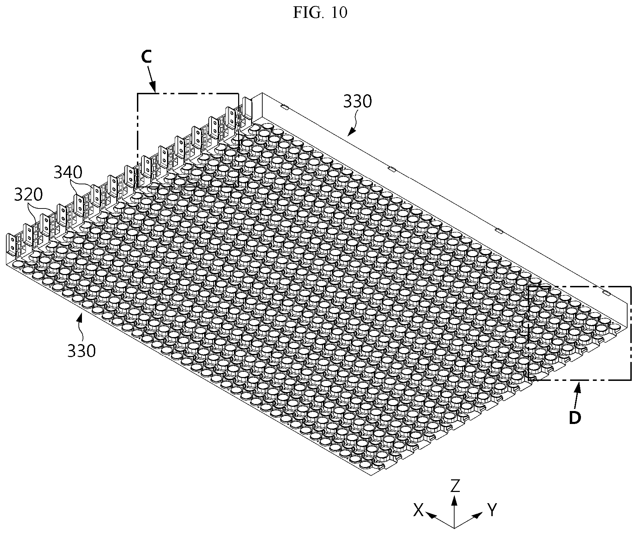

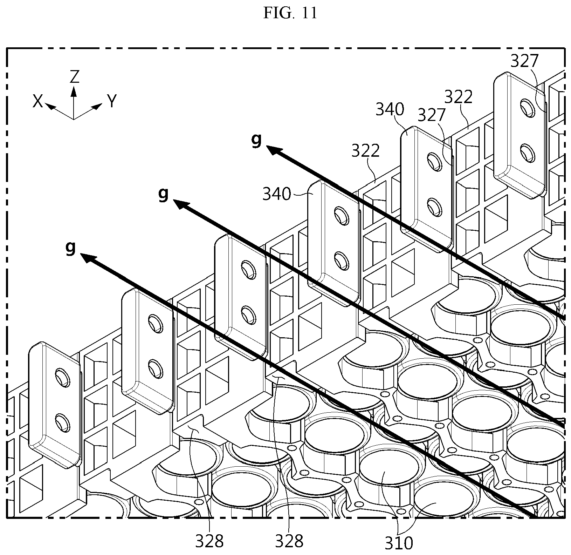

FIG. 8 is an exploded view showing some components of the cell array structure 300 of the battery pack according to an embodiment of the present disclosure. FIG. 9 is a diagram showing the cell array structure 300 of the battery pack according to an embodiment of the present disclosure. FIG. 10 is a diagram showing the cell array structure 300 of the battery pack according to an embodiment of the present disclosure when viewed from bottom. FIG. 11 is an enlarged view of section C in FIG. 10. Referring to FIGs. 8 to 11, the battery pack according to an embodiment of the present disclosure may include the cell array structure 300. The cell array structure 300 may include a pair of inner side walls 330, the plurality of side structures 320, a plurality of cooling units 340 and the plurality of battery cells 310.

At least some of the plurality of battery cells 310 may be mounted, coupled or fixed to the inner side wall 330. The inner side wall 330 may include a wall head at two ends in X axis direction. The wall head may have a slot. Additionally, the head 322 of the side structure 320 may have a slot 327. The slot 327 may pass through the head 322. Additionally, the slot 327 may be located on the venting hole 328.

The inner side wall 330 may be fastened, coupled, fixed or attached to the upper surface of the base plate 100. The inner side wall 330 may be located between the plurality of battery cells 310 and the outer side wall 200.

The side structure 320 may extend along X axis direction. The side structure 320 may fix and support the plurality of battery cells 310. The side structure 320 may include a plurality of side structures.

The cooling unit 340 may extend along X axis direction. The cooling unit 340 may contact the plurality of battery cells 310. The cooling unit 340 may include a plurality of cooling units. The cooling unit 340 may be inserted, coupled, mounted or fixed to the slot 327. Cooling liquids or cooling gases may flow through the cooling unit 340.

The side structure 320, the plurality of battery cells 310 and the cooling unit 340 may be arranged in an alternating manner. The pair of inner side walls 330 may be disposed on the outermost sides of the cell array structure 300.

The cell array structure 300 may be filled with resin. The resin may couple, fix or attach the components of the cell array structure 300. Additionally, the resin may improve stiffness the cell array structure 300.

By this configuration of the present disclosure, cooling efficiency of the battery pack may be improved. The cooling unit 340 may contact all the battery cells 310. Accordingly, thermal safety of the battery pack may be improved.

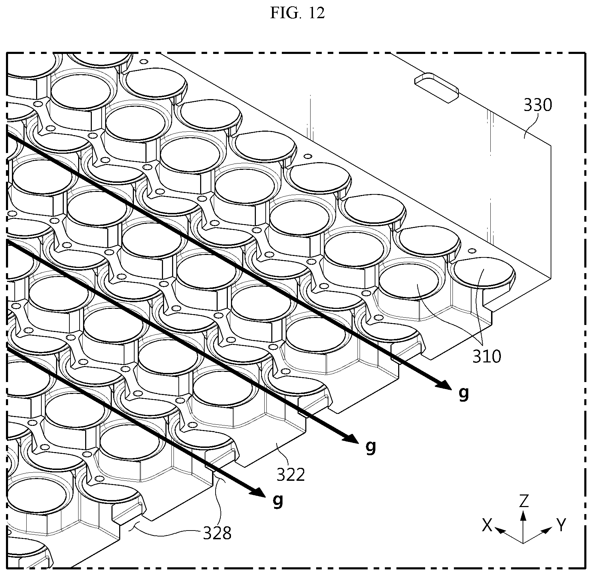

FIG. 12 is an enlarged view of section D in FIG. 10. Referring to FIGs. 10 to 12, venting gases (g) from the battery cells 310 of the battery pack according to an embodiment of the present disclosure may flow in +X axis direction and -X axis direction through the space between the battery cells 310 and the base plate 100. Additionally, the venting gases may flow in +X axis direction and -X axis direction through the venting hole 328.

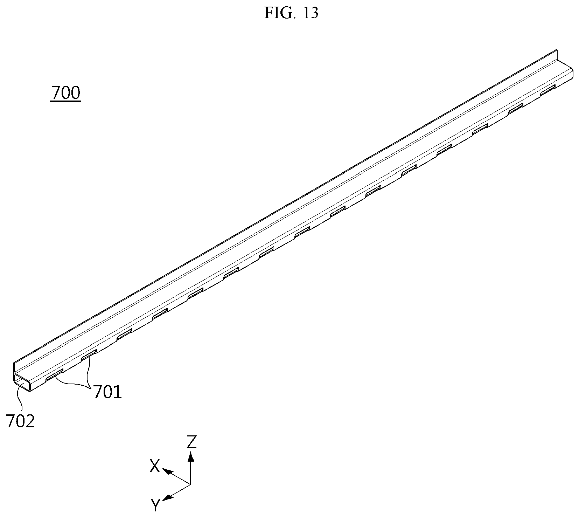

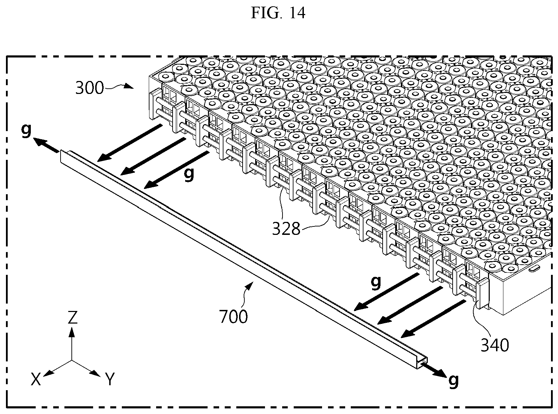

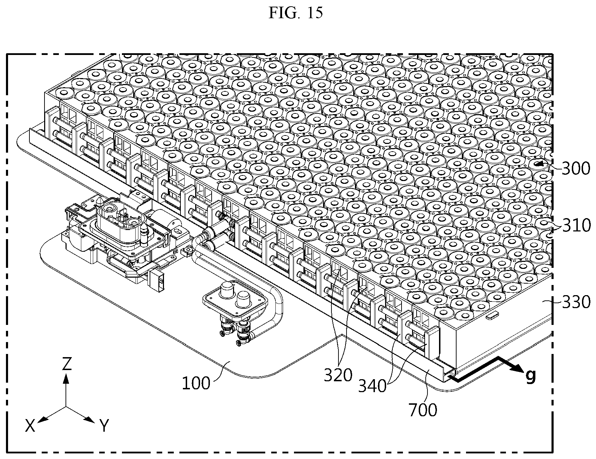

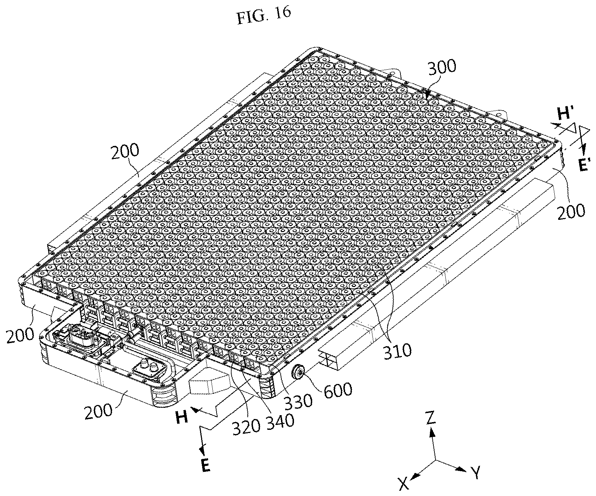

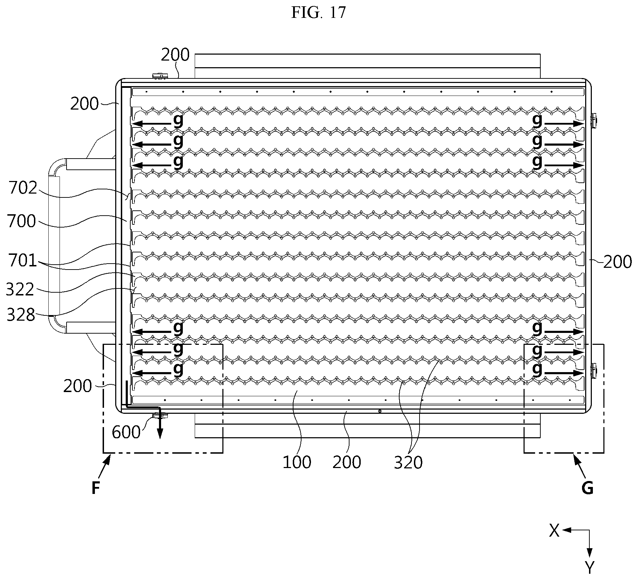

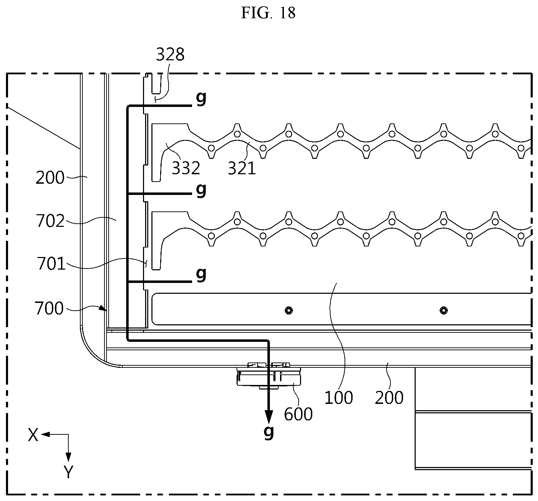

FIG. 13 is a diagram showing a guide pipe 700 of the battery pack according to an embodiment of the present disclosure. FIG. 14 is a diagram showing the cell array structure 300 and the guide pipe 700 of the battery pack according to an embodiment of the present disclosure. FIG. 15 is a diagram showing the connection of the cell array structure 300 and the guide pipe 700 of the battery pack according to an embodiment of the present disclosure. FIG. 16 is a perspective view showing some components of the battery pack according to an embodiment of the present disclosure. FIG. 17 is a cross-sectional view of FIG. 16, taken along the line E-E'. FIG. 18 is an enlarged view of section F in FIG. 17.

Referring to FIGs. 13 to 18, the battery pack according to an embodiment of the present disclosure may include the guide pipe 700.

The guide pipe 700 may extend along Y axis direction. The guide pipe 700 may be installed on the upper surface of the base plate 100. The guide pipe 700 may be located between the head 322 and the outer side wall 200.

The guide pipe 700 may have an inlet hole 701 formed in -X axis direction. The inlet hole 701 and the venting hole 328 may face each other. Additionally, the guide pipe 700 may be open in +Y axis direction and -Y axis direction.

The guide pipe 700 may be located below the cooling unit 340. The guide pipe 700 may be disposed between the base plate 100 and the cooling unit 340.

The venting gases (g) vented in +X axis direction through the venting hole 328 may enter the guide pipe 700 through the inlet hole 701. The venting gases (g) entering the guide pipe 700 may flow in +Y axis direction and -Y axis direction along a flow channel 702 in the guide pipe 700.

By this configuration of the present disclosure, it may be easy to control battery pack venting. Venting gases or flammable particles may flow through the space between the battery cells 310 and the base plate 100 and exit the battery pack through the venting hole 328 and the guide pipe 700.

Referring to FIG. 18, the battery pack according to an embodiment of the present disclosure may further include the venting device 600 installed at the outer side wall 200. The venting device 600 may be installed at the side of the battery pack. The venting device 600 may include a plurality of venting devices. Additionally, the venting device 600 may be disposed in +Y axis direction and -Y axis direction of the battery pack. The venting device 600 may bring the inside and outside of the battery pack into communication with each other when the pressure in the battery pack rises. The venting gases (g) flowing out of the guide pipe 700 may flow along the outer side wall 200. Additionally, the venting gases (g) may exit the battery pack through the venting device 600.

By this configuration of the present disclosure, it may be easy to control battery pack venting. Venting gases or flammable particles may exit the battery pack through the venting device 600.

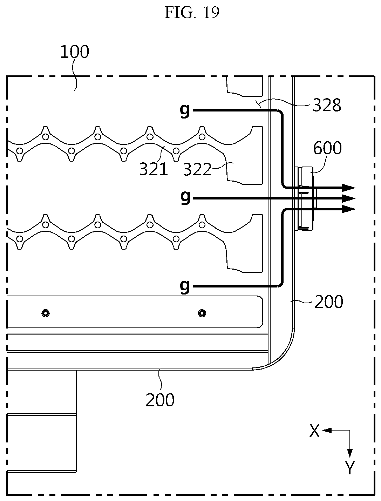

FIG. 19 is an enlarged view of section G in FIG. 17. Referring to FIG. 19, the venting device 600 may be installed at the rear side of the battery pack. The venting device 600 may include a plurality of venting devices. Additionally, the venting device 600 may be disposed in +X axis direction and -X axis direction of the battery pack. The venting device 600 may bring the inside and outside of the battery pack into communication with each other when the pressure in the battery pack rises. The venting gases (g) vented in -X axis direction or rearward direction through the venting hole 328 may flow along the outer side wall 200. Additionally, the venting gases (g) may exit the battery pack through the venting device 600.

By this configuration of the present disclosure, it may be easy to control battery pack venting. Venting gases or flammable particles may exit the battery pack through the venting device 600.

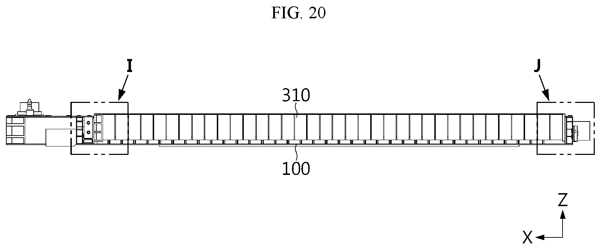

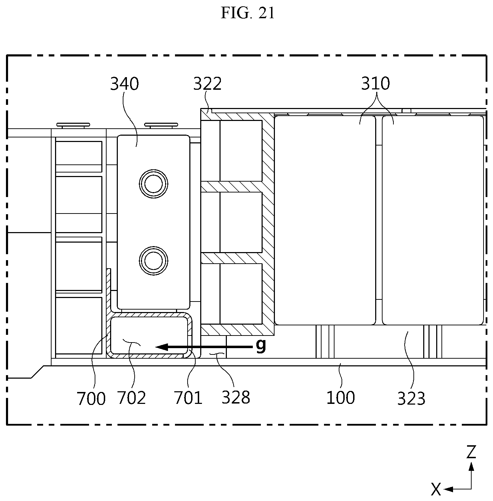

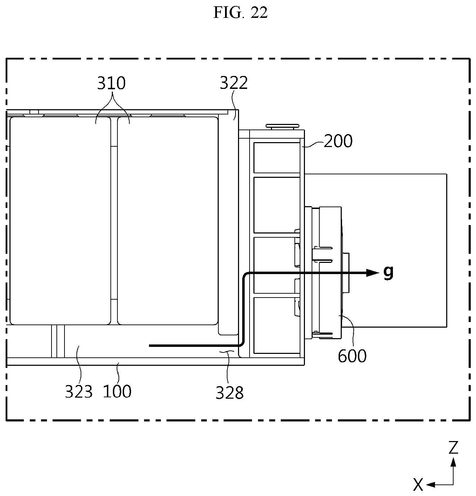

FIG. 20 is a cross-sectional view of FIG. 16, taken along the line H-H'. FIG. 21 is an enlarged view of section I in FIG. 20. FIG. 22 is an enlarged view of section J in FIG. 20. Referring to FIGs. 20 to 22, the height of the venting hole 328 of the battery pack according to an embodiment of the present disclosure may be lower than the height of the bottom rib 323. Because the venting hole 328 is lower than the height of the bottom rib 323, the head 322 may cover the side of the battery cells 310 to the lower end. Accordingly, it may be possible to prevent the exposure of the battery cells 310 through the venting hole 328.

By this configuration of the present disclosure, the side structure 320 may prevent or avoid the exposure of flames generated from the battery cells 310. Accordingly, thermal safety of the battery pack may be improved.

A vehicle according to the present disclosure may include the above-described battery pack according to the present disclosure. The battery pack according to the present disclosure may be used in vehicle applications, for example, electric vehicles or hybrid electric vehicles. Additionally, in addition to the battery pack, the vehicle according to the present disclosure may further include a variety of other components included in the vehicle. For example, the vehicle according to the present disclosure may further include a car body, a motor, a controller such as an electronic control unit (ECU), etc.

The terms indicating directions such as upper, lower, left, right, front, rear, inner and outer are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A battery pack comprising:
a base plate;
an outer side wall coupled to an upper surface of the base plate;
a plurality of battery cells located on the base plate and forming an array; and
a side structure located on the base plate, extended along one side of the base plate and configured to keep the plurality of battery cells and the base plate apart.

2. The battery pack according to claim 1,
wherein the side structure includes a body extended and configured to cover a side of the plurality of battery cells.

3. The battery pack according to claim 2,
wherein the body includes a curved portion formed along the side of the battery cells.

4. The battery pack according to claim 2,
wherein the side structure further includes:
a plurality of bottom ribs protruded from the body; and
a plurality of top ribs protruded from the body and located above the plurality of bottom ribs, and
wherein the plurality of battery cells is mounted between the plurality of bottom ribs and the plurality of top ribs.

5. The battery pack according to claim 4,
wherein the side structure further includes a partition portion protruded from the body and located between the adjacent battery cells among the plurality of battery cells.

6. The battery pack according to claim 4,
wherein the side structure includes:
a head formed at an end of the body and configured to cover the plurality of battery cells; and
a venting hole formed at the head and being in communication with a gap between the plurality of battery cells and the base plate.

7. The battery pack according to claim 6,
wherein the venting hole is open downward.

8. The battery pack according to claim 6,
wherein a height of the venting hole is lower than a height of the bottom ribs.

9. The battery pack according to claim 6, further comprising:
a guide pipe installed at the upper surface of the base plate and located between the head and the outer side wall, the guide pipe having an inlet hole, wherein the inlet hole and the venting hole face each other.

10. The battery pack according to claim 6,
wherein the head further includes a slot located on the venting hole, and
wherein the battery pack further comprises a cooling unit installed at the slot.

11. The battery pack according to claim 1, further comprising:
a venting device installed at the outer side wall.

12. A vehicle comprising the battery pack according to any one of claims 1 to 11.
